# EUROPEAN PATENT APPLICATION

(11) **EP 3 447 626 A2**
(43) Date of publication of application: **27.02.2019**
(21) Application number: 18184649.4
(22) Date of filing: 20.07.2018
(51) Int. Cl.: G06F 3/0488, G06F 3/0481, G06F 3/0485, G06F 3/14, H04B 5/00, G06F 9/451

(54) **DISPLAY APPARATUS AND CONTROL METHOD THEREOF**

(30) Priority: 22.08.2017 KR 20170106066
(71) Applicant: Samsung Electronics Co., Ltd., Gyeonggi-do 16677 (KR)
(72) Inventor: KANG, Jeannie, Seoul (KR); KIM, Dong-hyuk, Gyeonggi-do (KR); KIM, Soo-ah, Seoul (KR); KIM, Yong-ku, Seoul (KR); PARK, So-jeong, Gyeonggi-do (KR); BAE, Hyeon-seung, Gyeonggi-do (KR); WON, Dong-hee, Seoul (KR); LEE, Sung-hye, Seoul (KR); LEE, Jae-kwang, Gyeonggi-do (KR); CHOI, Hyun-ho, Gyeonggi-do (KR); HAN, Young-ran, Gyeonggi-do (KR)
(74) Representative: Appleyard Lees IP LLP

(57) **Abstract**

An electronic device (100) and a control method thereto are provided. The control method of the electronic device may include receiving an image, displayed by an external terminal (200), from the external terminal, displaying the received image (10) on one area of a display, and in response to receiving an input of a copy command user command for copying the received image, copying the received image displayed on the one area at the time when the copy command is input and displaying the copied image (20) on an area which is different from the one area.

## Description

### CROSS-REFERENCE TO RELATED APPLICATION

This application claims priority from and is based on Korean Patent Application No. 10-2017-0106066, filed in the Korean Intellectual Property Office on August 22, 2017, the disclosure of which is incorporated herein by reference in its entirety.

### BACKGROUND

### 1. Field

The disclosure relates to an electronic device and a control method thereof, more particularly, to an electronic device which includes a large-sized display and a control method thereof.

### 2. Description of Related Art

Generally, an electronic device with a large screen such as an electronic blackboard performs an interaction operation in the device, such as receiving and displaying a content transmitted from an external terminal via a display screen or displaying a pre-stored content, etc.

However, in the case of receiving and displaying a content transmitted from an external terminal, an electronic device displays only a content received from an external terminal on a screen, and is usually incapable of displaying another content together with the received content on the screen on which the received content is displayed.

Also, there is another problem that when displaying a content received from an external terminal on a screen, it is impossible to perform an editing operation such as copying the displayed content or a document task such as inputting text on a screen on which the content is displayed.

An electronic device with a large-sized screen such as an electronic blackboard is used in the place where users actively communicate with one another, but it has been difficult to facilitate the communication among the users using such an electronic device.

### SUMMARY

An aspect of the embodiments relates to providing various interaction environments by an electronic device which provides a large screen display.

According to an aspect of the disclosure, there is provided a control method of an electronic device comprising: receiving an image, displayed by an external terminal, from the external terminal; displaying the received image on a first area of a display of the electronic device; and in response to receiving a copy command from a user for copying the received image, copying the received image displayed on the first area at a time when the copy command is input and displaying the copied image on an second area which is different from the first area of the display.

The electronic device and the external terminal may include a Near Field Communication (NFC) module for NFC communication.

The method may further comprise: in response to the external terminal being tagged to the electronic device, performing a communication connection with the external terminal using the NFC module.

The displaying the received image on the first area of the display may comprise: displaying at least one of a first icon for guiding connection with the external terminal, to transmit a first image to be displayed on the first area and a second icon for transmitting a second image displayed on the display on a remaining area excluding the first area to the external terminal.

The displaying the received image on the first area of the display may comprise: displaying an icon for copying the received image displayed on the first area, and wherein the copy command for copying the received image may comprise selecting the icon for copying the received image.

The displaying the received image on the first area of the display may comprise: displaying an icon for editing at least one of a size, a position and a direction of the received image displayed on the first area; receiving a user selection of the icon; and editing at least one of a size, a position and a direction of the received image according to the user selection of the icon.

The displaying the copied image on the second area which is different from the first area may comprise displaying the received image on the first area and displaying the copied image on the second area.

The method may further comprise, in response to receiving a delete command from the user for deleting the received image while the received image and the copied image are displayed, deleting the received image displayed on the first area.

The display may display at least one of a plurality of pages, and the displaying the received image on the first area of the display may comprise, while scrolling a page based on a scroll command from the user for scrolling at least one of the pages displayed on the display, fixedly displaying the received image on the first area.

The displaying the received image on the first area of the display may comprise displaying a navigation window for guiding the plurality of pages on areas of the display other than the first area.

The method may further comprise: in response to sensing a first touch from the user in the first area while the received image is displayed on the first area, transmitting touch information corresponding to the sensed first touch to the external terminal; and in response to sensing a second touch from the user in a remaining area excluding the first area while the received image is displayed on the first area, performing a drawing function according to the second touch.

The copied image and the received image maybe simultaneously displayed in response to receiving the copy command for copying the received image.

According to another aspect of the disclosure, there is provided an electronic device comprising: a communicator; a display; and a processor configured to: receive an image, displayed by an external terminal, from the external terminal via the communicator; control the display to display the received image on a first area of the display, and in response to receiving a copy command from a user for copying the received image, copy the received image displayed on the first area of the display at a time when the copy command is input and display the copied image on a second area other than the first area of the display.

The communicator may comprise: a Near Field Communication (NFC) module configured to perform NFC communication with the external terminal.

The processor may further control the communicator to perform a communication connection with the external terminal using the NFC module, in response to the external terminal being tagged to the electronic device.

The processor maybe further configured to: control the display to display at least one of a first icon for guiding connection with the external terminal to transmit a first image to be displayed on the first area and a second icon for transmitting a second image displayed on the display on a remaining area excluding the first area to the external terminal.

The processor maybe further configured to control the display to display an icon for copying the received image displayed on the first area, and the copy command for copying the received image may comprise a selection of the icon for copying the received image.

The processor maybe further configured to control the display to display an icon for editing at least one of a size, a position, and a direction of the received image displayed on the first area; and in response to receiving a user selection of the icon, edit at least one of a size, a position and a direction of the received image according to the user selection of the icon.

The processor maybe further configured to: control the display to display the received image on the first area and display the copied image on the second area, and in response to receiving a delete command from the user for deleting the received image while the received image and the copied image are displayed, delete the received image displayed on the first area.

The display maybe configured to display at least one of a plurality of pages, and wherein the processor maybe further configured to control the display to fixedly display the received image on the first area while scrolling a page based on a scroll command from the user for scrolling at least one of the pages displayed on the display.

The processor maybe further configured to control the display to display a navigation window for guiding the plurality of pages on areas of the display other than the first area.

The processor maybe further configured to control the communicator to transmit touch information corresponding to the sensed first touch to the external terminal, in response to sensing a first touch from the user in the first area while the received image is displayed on the first area, and the processor is further configured to perform a drawing function according to the second touch, in response to sensing a second touch of the user in a remaining area other than the first area while the received image is displayed on the first area.

According to another aspect of the disclosure, there is provided an electronic blackboard comprising: a display; and a processor configured to: receive an image from an external terminal; display the received image on a first area of a display of the electronic blackboard; and receive a copy command from a user for copying the received image; copy the received image displayed on the first area at a time when the copy command is received; and display the copied image on an second area different from the first area, while the received image is displayed on the first area.

According to the above example embodiments, the electronic device may provide various interaction environments.

### BRIEF DESCRIPTION OF THE DRAWINGS

FIG. 1 is a diagram illustrating an example of overall operations of a system for a Picture in Picture (PIP) copy interaction according to an embodiment;
FIG. 2 is a block diagram illustrating an example of an electronic device according to an embodiment;
FIG. 3 is a diagram illustrating an example structure of a display according to an embodiment;
FIG. 4 is a block diagram illustrating an example of an electronic device according to an embodiment;
FIG. 5 is a block diagram illustrating an example of an external terminal according to an embodiment;
FIGS. 6A and 6B are diagrams illustrating an example of copying an image in an electronic device according to an embodiment;
FIGS. 7A, 7B, 8A, 8B, 9A, 9B, 10A and 10B are diagrams illustrating an example of editing an image received from an external terminal in an electronic device according to an embodiment;
FIGS. 11A and 11B are diagrams illustrating an example of displaying an PIP image in accordance with a user command in an electronic device according to an embodiment;
FIG. 12 is a diagram illustrating an example of displaying a navigation window in an electronic device according to an embodiment;
FIG. 13 is a diagram illustrating an example of performing an operation in accordance with a user command in a PIP mode in an electronic device according to an embodiment; and
FIG. 14 is a flowchart illustrating an example control method of an electronic device according to an embodiment.

### DETAILED DESCRIPTION

Before describing embodiments specifically, the terms used in the embodiments will be described briefly.

With respect to the terms used in an embodiment of the disclosure, general terms currently and widely used are selected in view of function with respect to the disclosure. However, the terms may vary according to an intention of a technician practicing in the pertinent art, an advent of new technology, etc. In specific cases, terms may be chosen arbitrarily, and in this case, definitions thereof will be described in the description of the corresponding disclosure. Accordingly, the terms used in the description should not necessarily be construed as simple names of the terms, but be defined based on meanings of the terms and overall contents of the embodiments.

The embodiments may vary, and may be provided in different embodiments. Various embodiments will be described with reference to accompanying drawings. However, this does not necessarily limit the scope of the embodiments to a specific embodiment form. Instead, modifications, equivalents and replacements included in the disclosed concept and technical scope of this description may be employed. While describing embodiments, if it is determined that the description regarding a known technology obscures the gist of the disclosure, a detailed description may be omitted.

The terms including ordinal number such as "first," "second," and so on may be used in the description and the claims to distinguish the elements from one another. These terms are used only for the purpose of differentiating one component from another, without limitation thereto.

A singular term includes a plural form unless otherwise indicated. The terms, "include," "comprise," "is configured to," etc. of the description are used to indicate the presence of features, numbers, steps, operations, elements, parts or combination thereof, and do not exclude the possibilities of combination or addition of one or more features, numbers, steps, operations, elements, parts or combination thereof.

In an embodiment, 'a module' or 'a unit' performs at least one function or operation, and may be realized as hardware, software, or combination thereof. Further, except the "modules" or "units" that have to be implemented by certain hardware, a plurality of "modules" or a plurality of "units" may be integrated into at least one module and realized as at least one processor (not illustrated).

In the embodiments, in the case where a certain part is "connected" to the other part, it may include not only the case where the part is "directly connected" to the other part, but also the case where the part is "electrically connected" to the other part with another element interposed therebetween.

The embodiments of the disclosure will be described in greater detail below in a manner that will be understood by one of ordinary skill in the art. However, the embodiments may be implemented as various different forms, and are not limited to the embodiments described herein. Also, well-known functions or constructions are not described in detail since they would obscure the invention with unnecessary detail, and throughout the specification, similar reference numerals are used for similar elements.

Hereinafter, various embodiments will be described in greater detail with reference to the accompanying drawings.

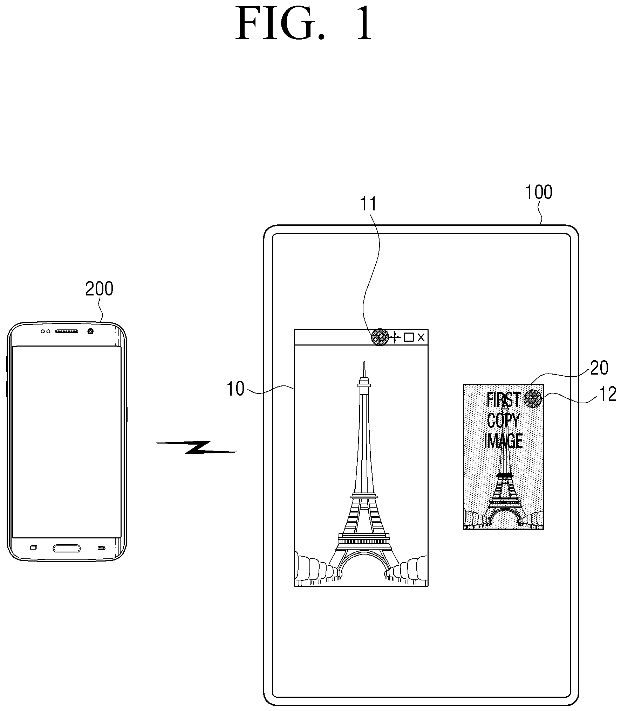

FIG. 1 is a diagram illustrating overall operations of a system for a Picture in Picture (PIP) copying interaction in accordance with an embodiment.

As illustrating in FIG. 1, according to an embodiment, a system may include an electronic device 100 and an external terminal 200.

The electronic device 100 may be a large screen display device such as an electronic black board used in a lecture room or a meeting room where various communications are conducted among users or an electronic advertisement panel installed in an exterior wall of a building.

The external terminal 200 may be a portable terminal device such as a smartphone, a tablet, etc. which communicates with the electronic device 100 and transmits and receives data to and from the electronic device 100, or may be a display device such as a smart TV.

For example, the external terminal 200 which is connected with the electronic device 100 for communication may transmit image information displayed on the external terminal 200 to the electronic device 100. Accordingly, the electronic device 100 may display the same image (hereinafter, referred to as a first image; 10) as the image displayed on the external terminal 200 on the first area of a display based on the image information received from the external terminal 200.

When a user touch is sensed in the first area while the first image 10 is displayed in the first area, the electronic device 100 may transmit touch information corresponding to the sensed user touch to the external terminal 200 which transmits the first image 10.

For example, if the first image 10 displayed in the first area is a video, when a user touch is sensed in the first area, the electronic device 100 may transmit the touch information such as pausing, high-speed reproduction, rewinding, etc. to the external terminal 200 which transmits the first image 10.

When a user touch is sensed in the remaining area excluding the first area while the first image 10 is displayed in the first area, the electronic device 100 may perform a drawing function according to the user touch and display the drawing image in the area in which the user touch is sensed.

The electronic device 100 may display an icon 11 for copying the first image 10 along with the first image 10 on the first area. When the icon 11 is selected, the electronic device 100 may copy the first image 10 displayed on the first area of the display, and display the copied image (hereinafter, referred to as a first copy image; 20) on an area different from the first area. In other words, when the icon 11 is selected, the electronic device 100 may display the first image in the first area of the display, and operate in a PIP mode in which the image copied from the first image is displayed on the area different from the first area.

For example, if the first image 10 displayed in the first area is a still image, when the icon 11 is selected, the electronic device 10 may generate the first copy image 20 relating to the first image 10 and display the copy image in an area different from the first area.

If the first image 10 displayed in the first area is a video, the electronic device 100 may generate the first copy image 20 relating to an image frame displayed at the time when the icon 11 is selected among a plurality of image frames which forms the first image 10 and display the copy image 20 in an area different from the first area.

The electronic device 100 may display an icon 12 for editing the first image 10 along with the first image 10 on the first area. When the icon 12 is selected, the electronic device 100 may edit at least one of a size, a position and a direction of the first image 10 displayed in the first area of the display.

The electronic device 100 may display at least one of a plurality of pages on the display, display the first image 10 in the first area of the display in which at least one page is displayed, and display the first copy image 20 in the second area which is different from the first area.

While the first copy image 20 is displayed as above, when a user touch on the second area in which the first copy image 20 is displayed is input, the electronic device 100 may edit at least one of a position, a size, and a direction of the first copy image 20 displayed in the second area.

As described above, when a user command for scrolling a page is input while at least one page, the first image 10 and the second copy image 20 are displayed on the display, the electronic device 10 may scroll the page in a direction corresponding to the user command. Once the page is scrolled, the electronic device 10 may display the scrolled page and the first image 10 in the first area.

According to an embodiment, the display may have a layered structure in which a plurality of layers are stacked, and the first page among a plurality of pages and the first copy image 20 copied from the first image 10 may be displayed in the first layer among the plurality of layers, and the first image 10 received from the external terminal 100 may be displayed in the first area in the second layer.

Thus, when a user command for scrolling a page is input, the electronic device 100 may fix and display the first image 10 in the second layer, and change the first page to a scrolled page according to the user command and display the scrolled page. Accordingly, when the page is changed according to the user command for scrolling a page, the electronic device 100 may display only the first image 10 in the first area of the display.

The operations of the system for a Picture in Picture (PIP) copy interaction have been described in accordance with an embodiment. In the below description, the example configurations of the electronic device 100 and the external terminal 200 will be described in detail.

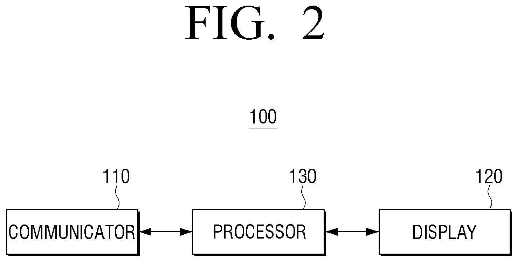

FIG. 2 is a block diagram illustrating an example of an electronic device in accordance with an embodiment.

As illustrated in FIG. 2, the electronic device 100 may include a communicator 110, a display 120 and a processor 130.

The communicator 110 may perform data communication with the external terminal 200, such as a smartphone, a tablet PC, a PC, etc. wirelessly or via cable and receive data relating to an image displayed by the external terminal 200 from the external terminal 200.

According to an embodiment, the communicator 110 may perform data communication with the external terminal 200 using a near field communication (NFC) module and receive the data relating to an image displayed by the external terminal 200 from the external terminal 200.

For example, when the external terminal 200 capable of performing an NFC communication approaches to an NFC communication module provided in one side of the electronic device 100, the communicator 110 may perform an NFC communication with the external terminal 200 and receive the data relating to an image displayed by the external terminal 200.

According to another embodiment, when a user command for communication connection with the external terminal 200 is input, the communicator 110 may transmit a message for communication connection by a broadcasting method. When one of a plurality of the external terminals 200 which receives the message for communication connection is selected, the communicator 110 may perform a communication connection with the external terminal 200, which is selected by a user based on a response message received from the selected external terminal 200. The communicator 110 may receive the data relating to an image displayed by the connected external terminal 200.

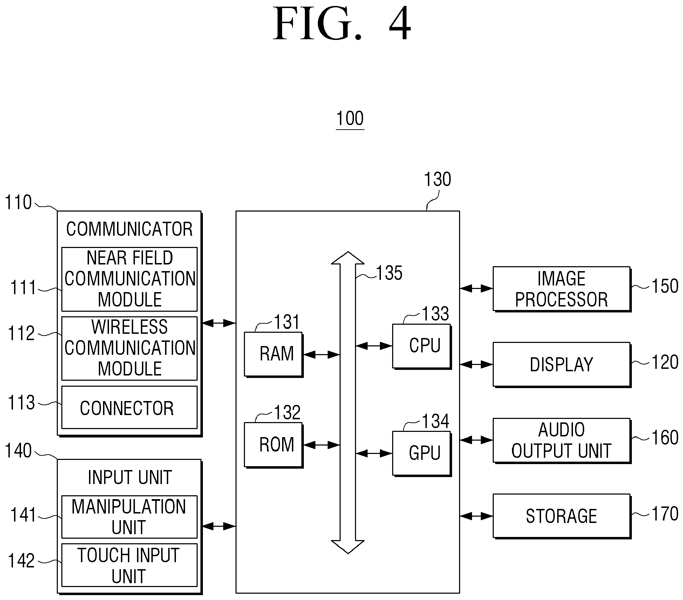

The communicator 110 will be described in greater detail with reference to FIG. 4 below.

An image to be displayed by the external terminal 200 may be displayed in one area of the display 120 based on the data received from the external terminal 200 connected with the electronic device 100. Also, a copied image relating to the image displayed in the one area may be displayed in an area different from the one area in which the image is displayed.

The processor 130 may control overall operations relating to the elements of the electronic device 100. When an image displayed by the external terminal 200 is received from the external terminal 200 via the communicator 110, the processor may control the display 120 to display the received image in one area of the display 120. Accordingly, the image displayed by the external terminal 200 may be displayed in one area of the display 120.

For example, when the data relating to an image displayed by the external terminal 200 is received from the external terminal 200 via the communicator 130, the processor 130 may generate the same image (hereinafter, referred to as a first image) as the image displayed by the external terminal 200, and control the display 120 to display the generated first image. Accordingly, the first image may be displayed in one area (hereinafter, referred to as the first area) of the display 120.

When a user command for copying the first image displayed in the first area of the display 120 is input, the processor 130 may copy the first image displayed in the first area at the time when the user command is input, and control the display 120 to display the copied image in an area (hereinafter, referred to as a second area) different from the first area. Accordingly, the first image may be displayed in the first area, and the image copied from the first image may be displayed in the second area of the display 120.

The processor 130 may control the display 120 to display an icon (hereinafter, referred to as a first icon) for copying the first image along with the first image in the first area. Accordingly, the first image and the first icon for copying the first image may be displayed in the first area of the display 120. When the first icon is selected, the processor 130 may determine that a user command for copying the first image is input, copy the first image displayed at the time when the first icon is selected, and display the copied image in the second area of the display 120.

According to another embodiment, the processor 130 may control the display to display at least one of an icon (hereinafter, referred to as a second icon) for guiding connection with the external terminal 200 which transmits data relating to the first image to be displayed in the first area and an icon (hereinafter, referred to as a third icon) for transmitting an image displayed in an area of the display 120 other than the first area of the display 120 to the external terminal 200. According to an embodiment, the third icon is for transmitting the copied image that is displayed in the second area of the display 120 to the external terminal 200.

Accordingly, the second and third icons may be displayed on an area different from the first and second areas of the display 120 in which the first image and the copied image are displayed.

When a user command for the second icon is input while the second and third icons are displayed, the processor 130 may provide a list including a plurality of external terminals 200 capable of connecting with the electronic device 100 for communication. When one of the plurality of external terminals 200 included in the list is selected, the processor 130 may control the communicator 110 to receive an image displayed by the external terminal 200 from the selected external terminal 200. Accordingly, the communicator 110 may receive the data relating to the image displayed by the external terminal 200 from the external terminal 200 selected by a user.

When a user command for the third icon is input, the processor 130 may provide a list including a plurality of external terminals 200 capable of connecting with the electronic device 100 for communication. When one of the plurality of external terminals 200 included in the list is selected, the processor 130 may control the communicator 110 to transmit the image displayed in the area other than the first area to the selected external terminal 200. Accordingly, the communicator 110 may transmit the data relating to the image displayed in the area other than first area to the external terminal 200 selected by a user. According to an embodiment, when one of the plurality of external terminals 200 included in the list is selected, the processor 130 may control the communicator 110 to transmit the copied image that is displayed in the second area of the display 120 to the external terminal 200. Accordingly, the communicator 110 may transmit the data relating to the copy image that is displayed in the second area of the display 120 to the external terminal 200 selected by a user.

According to another embodiment, the processor 130 may control the display 120 to display an icon (hereinafter, referred to as a fourth icon) for editing at least one of a size, a position and a direction of the first image along with the first image in the first area. When a user command is input through the fourth icon while the fourth icon is displayed in the first area in which the first image is displayed, the processor 130 may edit at least one of a size, a position and a direction of the first image displayed in the first area according to the user command. Accordingly, the first image of which at least one of a size, a position and a direction is edited may be displayed in the first area of the display 120.

According to another embodiment, when a user command for deleting the first image is input while the first image is displayed in the first area and a copied image relating to the first image is displayed in the second image, the processor 130 may delete the first image displayed in one area.

According to another embodiment, when a user command for scrolling at least one of pages displayed on the display 120 is input while at least one of the plurality of pages is displayed through the display 120, the processor 130 may control the display 120 to fix and display the first image in the first area while scrolling the page based on the input user command. Accordingly, only the first image may be fixed and displayed in the first area in the scrolled page.

According to another embodiment, the processor 130 may display a navigation window for guiding a plurality of pages in another area (hereinafter, referred to as a third area) of the display 120.

Also, when a user touch is sensed in the first area while the first image is displayed in the first area, the processor 130 may control the communicator 110 to transmit touch information corresponding to the sensed user touch to the external terminal 200 which transmits the first image. Accordingly, the communicator 110 may transmit the touch information to the external terminal 200 which transmits the first image.

If it is determined that a user touch is sensed in the remaining area excluding the first area while the first image is displayed in the first area, the processor 130 may perform a drawing function according to the user touch. Accordingly, a drawing image may be displayed in the area in which the user touch is sensed on the display 120.

The display may be configured with a plurality of layers. The embodiment will be described below.

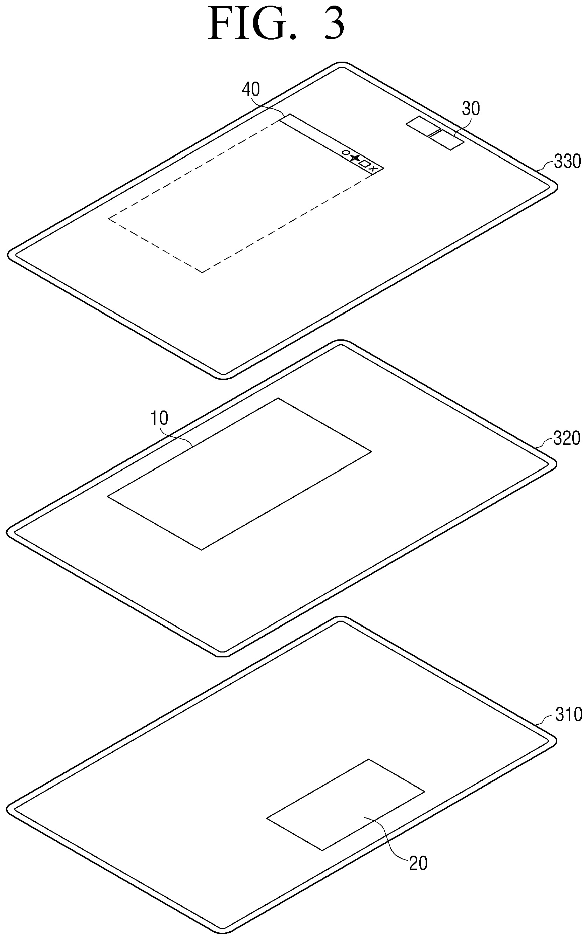

FIG. 3 is a diagram illustrating an example structure of a display in accordance with an embodiment.

As illustrated in FIG. 3, the display 120 may be configured with a plurality of layers 310, 320 and 330.

The first layer 310 among the plurality of layers 310, 320 and 330 may display at least one of a plurality of pages and a drawing image corresponding to a user touch. Also, an image copied from the first image received from the external terminal 200 may be displayed in the first layer 310.

The second layer 320 may be arranged on an upper end of the first layer 310, and the first image received from the external terminal 200 may be displayed in the second layer 320. For example, the first image received from the external terminal 200 may be displayed in the first area.

The third layer 330 may be arranged on an upper end of the second layer 320, and various Uls may be displayed in the third layer 330.

According to an embodiment, the first UI 30 which includes an icon for copying the first image received from the external terminal 200 and an icon for guiding connection with the external terminal 200, and the second UI 40 which includes an icon for transmitting the first image displayed in the first area to the external terminal 200 and an icon for editing at least one of a size, a position and a direction of the first image may be displayed in the third layer 330.

As the display 120 may be implemented as the first to third layers 310, 320 and 330, when a user command for scrolling a page is input, the processor 130 may control the display 120 to fix and display the first image in the first area in the first layer 310 and change the first page displayed in the second layer 320 to a scrolled page according to the user command. The processor 130 may control the display 120 to fix and display the UI displayed in the third layer 330 irrespective of the user command for scrolling a page.

Accordingly, when the first page in which the image copied from the first image is displayed is scrolled to the second page, the page displayed in the third layer 330 may be changed from the first page to the second page while maintaining the display of the first image and the UI in the first layer 310 and the second layer 320.

However, the embodiments are not limited to the above example. The plurality of layers 310, 320 and 330 may be arranged differently from the above arrangement.

FIG. 4 is a block diagram illustrating an example of an electronic device in accordance with an embodiment.

As described above, if the electronic device 100 is a large screen display such as an electronic blackboard or an electronic advertisement installed on the exterior wall of a building, the electronic device 100 may further include an input unit 140, an image processor 150, an audio output unit 160 and a storage 170 in addition to the communicator 110, the display 120 and the processor 130 as illustrated in FIG. 4.

The communicator 110 may include a near field communicator module 11, a wireless communicator module 112 and a connector 113.

The near field communication module 111 may perform a near field wireless communication with at least one of the external terminals 200 located nearby, and may include at least one of a Bluetooth module, a ZigBee module, an NFC module, and etc.

The wireless communication module 112 may be connected to an external network in accordance with a wireless communication protocol such as an IEEE and perform a communication via the network. However, the embodiments are not limited to the above example, and the wireless communication module 112 may access a mobile communication network and perform a communication in accordance with various mobile communication standards such as a 3rd generation (3G), a 3rd generation partnership project (3GPP), a long term evolution (LTE), etc.

The connector 113 may provide an interface with various source devices such as USB 2.0, USB 3.0, HDMI, IEEE 1394, etc. The connector 113 may receive the data relating to an image transmitted from the external terminal 200 or an external server (not illustrated) via cable connected to the connector 113 in accordance with a control command of the processor 130, or transmit data relating to a predetermined image to an external recording medium. The connector may also receive power from a power source via cable which is physically connected to the connector 113.

The input unit 140 may receive various user commands and transmit the user commands to the processor 130, and may include a manipulation unit 141 and a touch input unit 142.

The manipulation unit 141 may be implemented as a key pad including a variety of a function key, a number key, a special key, a text key, etc. The touch input unit 142 may be implemented as a touch pad which forms an interactive layer structure with the display 120. In this case, the touch input unit 142 may receive a selection command for an icon relating to various Uls displayed through the display 120.

The display 120 may be implemented as a liquid crystal display (LCD), an organic light emitting display (OLED), etc.

The image processor 150 may process the data relating to the first image received from the external terminal 200 to become a signal which is able to be output via at least one of the display 120 and the audio output unit 160 of the display apparatus 100.

The audio output unit 160 may output audio data included in the data relating to the first image received from the external terminal 200 in a form of audible sound via a speaker (not illustrated).

The storage 170 may store image and audio data received from the external terminal 200 and data relating to a copied image relating to the first image. Also, the storage 170 may further store an operation program for controlling an operation of the electronic device 100. The operation program may be read by the storage 170 when the electronic device 100 is turned on, be complied, and become a program for operating the elements of the electronic device 100.

The processor 130 may include a RAM 131, a ROM 132, a CPU 133, and a GPU 134, and the RAM 131, the ROM 132, the CPU 133, and a GPU 134 may be connected with one another via a bus 135.

The CPU 133 may access the storage 170 and perform booting using an O/S stored in the storage 170. The CPU 133 may also perform various operations using a variety of programs, content, data, etc. stored in the storage 170.

The GPU 134 may generate a display screen including various objects such as an icon, an image, text, etc. For example, the GPU 134 may calculate an attribute value such as a coordinate value, a shape, a size, a color, etc. with which each object is displayed conforming to the layout of the screen based on a received control command, and generate a screen of a variety of layouts which includes an object based on the calculated attribute value.

The ROM 131 may store a command word set, etc. for booting a system. Once a turn-on command is input and power is supplied, the CPU 133 may copy the O/S stored in the storage 170 to the RAM 124 in response to a command word stored in the ROM 131, and boot the system by executing the O/S. Once the booting is completed, the CPU 133 may copy various application programs stored in the storage 170 to the RAM 132, and perform various operations by executing the application program copied to the RAM 132.

The processor may be combined with the above elements and be implemented as a system on chip (SOC).

The operations of the processor 130 may be performed by a program stored in the storage 170. The storage 170 may be implemented as at least one of a ROM 131, a RAM 132, or a memory card (e.g., an SD card, a memory stick) attachable to and from the electronic device 100, a non-volatile memory, a volatile memory, a hard disk drive (HDD) or a solid state drive (SSD).

The elements of the electronic device 100 have been described. In the below description, each element of the external terminal 200 which provides an image to the electronic device 100 will be described in detail.

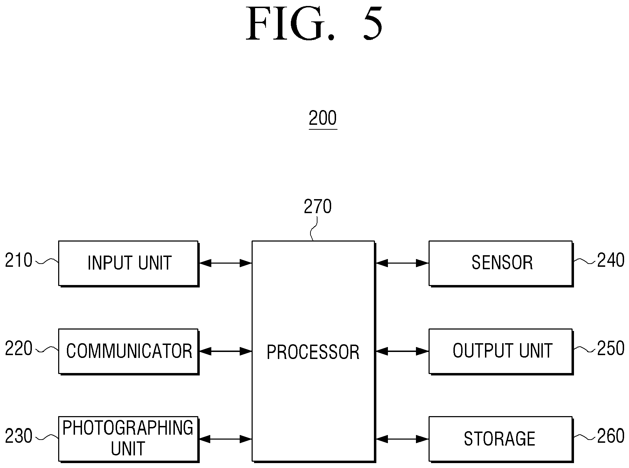

FIG. 5 is a block diagram illustrating an example of an external terminal in accordance with an embodiment.

The external terminal 200 may be a portable terminal device such as a smartphone, a tablet, etc. or may be a display device such as a smart TV.

For example, if the external terminal 200 is a portable terminal device, the external terminal 200 may include an input unit 210, a communicator 220, a photographing unit 230, a sensor 240, an output unit 250, a storage 260, and a processor 270 as illustrated in FIG. 5.

The input unit 210 may receive various user commands and transmit the user commands to the processor 270, and may include a microphone (not illustrated) which receives a user voice, a manipulation unit (not illustrated) which is implemented as a key pad including various function keys, number keys, special keys, text keys, etc., and a touch input unit (not illustrated) which receives a touch command of a user, etc.

The communicator 220 may perform data communication with a terminal (not illustrated) nearby which is within the range of a common network wirelessly or via cable, or perform near field communication with the electronic device 100 using an NFC communication module.

For example, the communicator 220 may transmit image-related data to the electronic device 200 using a distance communication module (not illustrated) such as a near field communication (NFC). The communicator 220 may also perform data communication with the electronic device 200 and a terminal (not illustrated) nearby using a near field communication module (not illustrated) such as a Bluetooth module, a Wi-Fi module, and a Zigbee module.

Also, the communicator 220 may be connected to an external network in accordance with a wireless communication protocol such an IEEE, etc. using a wireless RAN module and perform communication, or may access to a mobile communication network and perform communication in accordance with various mobile communication standards such as a 3rd generation (3G), a 3rd generation partnership project (3GPP), a long term evolution (LTE), etc.

The photographic unit 230 may photograph an image relating to a surrounding environment, and the sensor 240 may sense a motion of the external terminal 200 or various motions of a user. According to an embodiment, the sensor 240 may include a motion sensor which senses a motion of the external terminal 200, a pupil tracing sensor which traces a pupil of a user, a geomagnetic sensor which detects an azimuth using a geo-magnetic field, a gravity sensor which senses a movement direction of the external terminal 200 by detecting to which direction gravity is applied, etc.

The output unit 240 may output content corresponding to a user command, and may display image data included in content through a display (not illustrated) and output audio data included in content via a speaker (not illustrated) in a form of audible sound.

The storage 250 may store various content and operation programs for controlling an operation of the external terminal 200. When the external terminal 200 is turned on, the operation program may be read by the storage 250, be complied, and become a program for operating the elements of the external terminal 200.

The processor 260 may control overall operations relating to the elements of the external terminal 200. For example, when the external terminal 200 is turned on, the processor 260 may perform booting using an operation program related to an operating system (O/S) stored in the storage 250, and once the booting is completed, the processor 260 may execute various operation programs stored in the storage 250 and control the operations related to the elements of the external terminal 200.

When the external terminal 200 is connected with the electronic device 100 for communication using an NFC communication module, the processor 260 may control the communicator 220 to transmit data relating to an image output via the output unit. For example, if the image output via the output unit 240 is a still image, the processor 260 may control the communicator 220 to transmit the image data relating to the still image to the electronic device 100. Also, if the image output via the output unit 240 is a video, the processor 260 may control the communicator 220 to transmit the image and audio data relating to the video to the electronic device 100.

The processor may also control the communicator 220 to transmit an image (a still image or a video) output via the output unit 240 to the electronic device 100 in accordance with a request from the electronic device 100 which is connected with the external terminal 200 for communication.

Also, after the processor 260 transmits the image to the electronic device 100, if a control command for the image is received from the electronic device 100, the processor 260 may control an image output via the output unit 240 based on the received control command. For example, if a control command relating to pausing of a video is received after the video is transmitted to the electronic device 100, the processor 260 may pause the video output via the output unit 240 in response to the received control command.

The elements of the external terminal 200 have been described above in accordance with an embodiment. In the below description, the operations which the electronic device 100 performs will be described in detail in accordance with various embodiments.

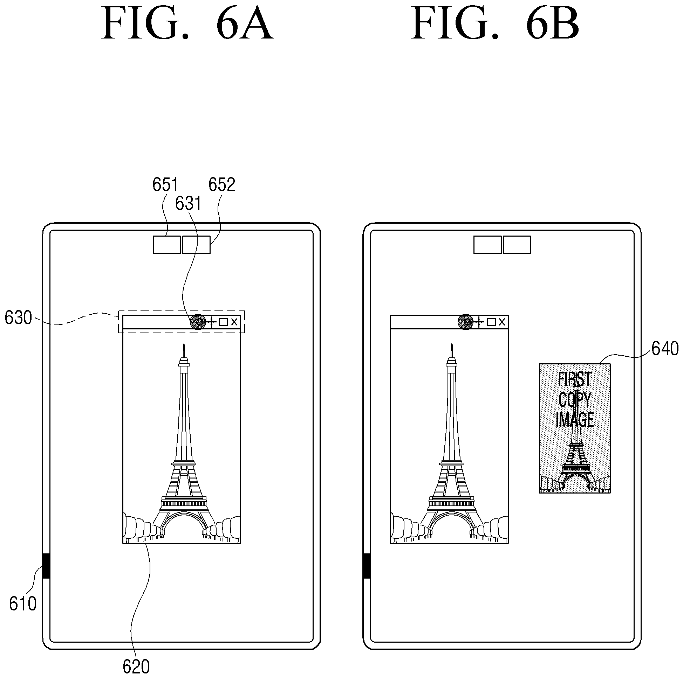

FIGS. 6A and 6B are diagrams illustrating an example of copying an image in an electronic device in accordance with an embodiment.

As illustrated in FIG. 6A, when the external terminal 200 approaches an NFC communication module 610 arranged in one side of the electronic device 100 and an NFC communication between the electronic device 100 and the external terminal 200 commences, the electronic device 100 may receive data relating to an image displayed by the external terminal 200 from the external terminal 200.

The electronic device 100 may display an image 620 (hereinafter, referred to as a first image) corresponding to the image displayed by the external terminal 200 in the first area of the display 120 based on the data received from the external terminal 200. The electronic device 100 may also display a UI 630 including a plurality of icons for receiving an input of a user command relating to the first image 620 along with the first image 620 in the first area.

When the first icon 631 for copying the first image 620 among the icons displayed in the UI 630 is selected, the electronic device 200 may copy the first image 620 displayed in the first area at the time when the first icon 631 is selected. The electronic device 200 may display the image copied from the first image 620 in the second area different from the first area as illustrated in FIG. 6A.

However, the embodiments are not limited to the above example, and as illustrated in FIG. 6B, when the first copy image 640 relating to the first image 620 displayed in the first area is generated, the electronic device 100 may move and display the first image 620 displayed in the first area to one side, and display the first copy image 640 in the predetermined second area among the areas in which the first image 620 is not displayed.

The electronic device 100 may edit the first copy image 630 displayed in the second area in response to a user command.

For example, when a user touch for moving the first copy image 640 is input after the area in which the first copy image 640 is displayed is touched, the electronic device 100 may move the first copy image 640 displayed in the second area to an area corresponding to the first direction in which a user touch is input and display the first copy image 640 in the area.

Also, when a user touch of touching the area in which the first copy image 640 is displayed for a predetermined threshold time or more is input, the electronic device 100 may display a UI for editing the first copy image 640 displayed in the second area, such as such as deleting, copying, etc. of the image, around the second area in which the first copy image 640 is displayed. When a user command is input while the UI is displayed, the electronic device 100 may perform an editing operation such as deleting or copying the first copy image 640 displayed in the second area.

The electronic device 100 may display an icon 651 (hereinafter, referred to as a second icon) for guiding connection with the external terminal 200 and an icon 652 (hereinafter, referred to as a third icon) for transmitting the first image 620 displayed in the first area to the external terminal 200 in the third area of the display 120.

For example, when the second icon 651 is selected, the electronic device 100 may transmit a message for communication connection by a broadcasting method, and when a response message is received from at least one of the external terminals 200, the electronic device 100 may display a list regarding the external terminal 200 which transmits the response message. When one of the plurality of external terminals 200 in the list is selected, the electronic device 100 may perform communication connection with the selected external terminal 200. When data relating to an image displayed by the external terminal 200 is received from the connected external terminal 200, the electronic device 100 may display the first image 620 corresponding to the image displayed by the external terminal 200 in the first area of the display 120 based on the received data.

Also, when the third icon 652 is selected, the electronic device 100 may transmit an image other than the first image 620 displayed in the first area of the display 120 to the external terminal 200. According to an embodiment, when the third icon 652 is selected, the electronic device 100 may transmit the copied image 640 that is displayed in the second area of the display 120 to the external terminal 200.

According to an embodiment, when the third icon 652 is selected, the electronic device 100 may transmit the copied image 640 to the external terminal 200 which transmits the image.

According to another embodiment, when the third icon 652 is selected, the electronic device 100 may display a list regarding the external terminal 200 which transmits a response message based on a pre-received response message. If there is no response message, the electronic device 100 may receive a message for communication connection by a broadcasting method, and when a response message is received from at least one of the external terminals 200, the electronic device may display a list regarding the external terminal 200 which transmits the response message.

When at least one of the plurality of external terminals 200 in the list is selected, the electronic device 100 may perform communication connection with the selected at least one of the external terminals 200, and transmits the copied image 640 620 to the connected at least one of external terminals 200.

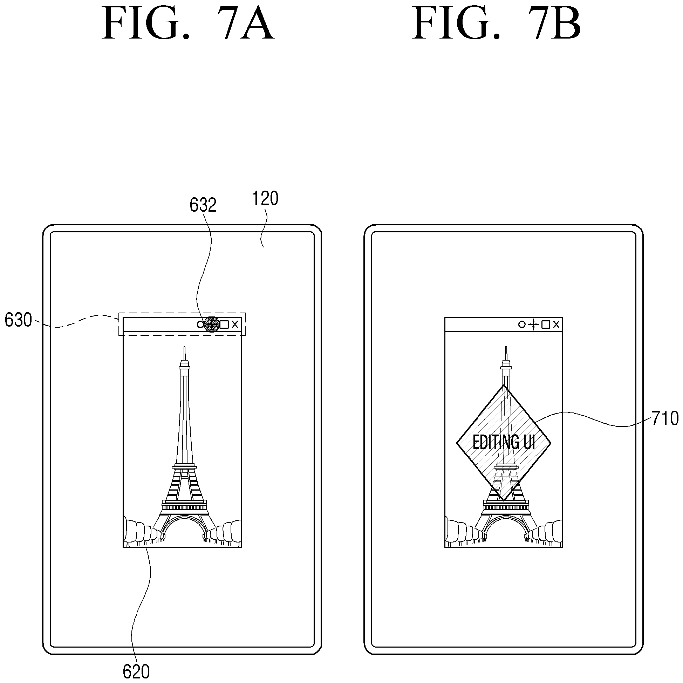

FIGS. 7A, 7B, 8A, 8B, 9A, 9B, 10A and 10B are diagrams illustrating an example of editing an image received from an external terminal in an electronic device in accordance with an embodiment.

As illustrated in FIGS. 6A and 6B, the electronic device 100 may display a UI 630 including a plurality of icons for receiving an input of a user command relating to the first image 620 along with the first image 620 in the first area of the display 120.

For example, as illustrated in FIG. 7A, the electronic device 100 may display a UI 630 including the first icon 631 for copying the first image 620 and the fourth icon 632 for editing the first image 620 along with the first image 620 in the first area of the display 120.

When a user command for the fourth icon 632 is input while the UI 630 is displayed, the electronic device 100 may display an editing UI 710 for guiding the editing of the first image 620 as illustrated in FIG. 7B. Accordingly, a user may edit the first image 620 using the editing UI 710.

For example, when a user touch is input while the editing UI 710 is displayed, the electronic device 100 may identify whether the point at which the user touch is input is within the editing UI 710. If it is determined that the point at which the user touch is input is within the editing UI 710, the electronic device 100 may identify whether the user touch is a single touch or a multi-touch.

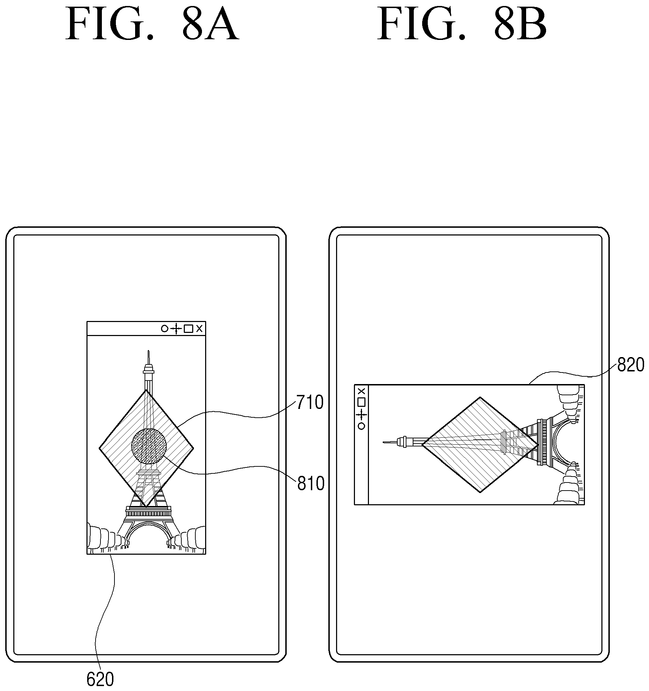

As illustrated in FIG. 8A, the electronic device 100 may determine that the user touch in the area in which the editing UI 710 is displayed is a single touch which touches the first point 810. In this case, as illustrated in FIG. 8B, the electronic device 100 may rotate the first image 620 in one direction, and display an edited image 820 rotated in one direction.

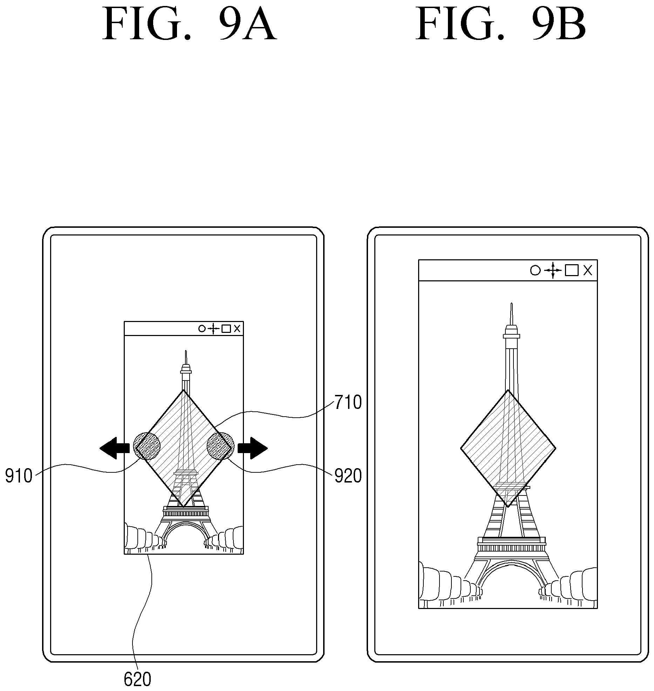

Meanwhile, as illustrated in FIGS. 9A and 9B, the electronic device 100 may determine that the user touch within the area in which the editing UI 710 is displayed is a multi-touch which touches the second and third points 910 and 920. While it is determined that the user touch is a multi-touch, when a user touch of pinching out which moves in the first and second directions is sensed, the electronic device 100 may enlarge the size of the first image 620 to a size corresponding to the user touch moving in the first and second directions and display the enlarged editing image 930.

For example, when a user touch of pinching out is sensed, the electronic device 100 may enlarge the size of the first image 620 according to a distance difference between the second and third points 910 and 920 which are the first multi-touches and the pinched-out user touch points, and display the enlarged edited image 930.

When a user touch of pinching in is sensed, the electronic device 100 may reduce the size of the first image 620 according to a distance difference between the second and third points 910 and 920 which are the first multi-touches and the pinched-in user touch points, and display the reduced size of the first image 620.

The UI 630 which is displayed together with the first image 620 in the first area in the electronic device 100 may further include a fifth icon 633 for deleting the first image 620. Thus, when a user command relating to the fifth icon 633 displayed in the UI 630 is input, the first image 620 displayed in the first area may be deleted.

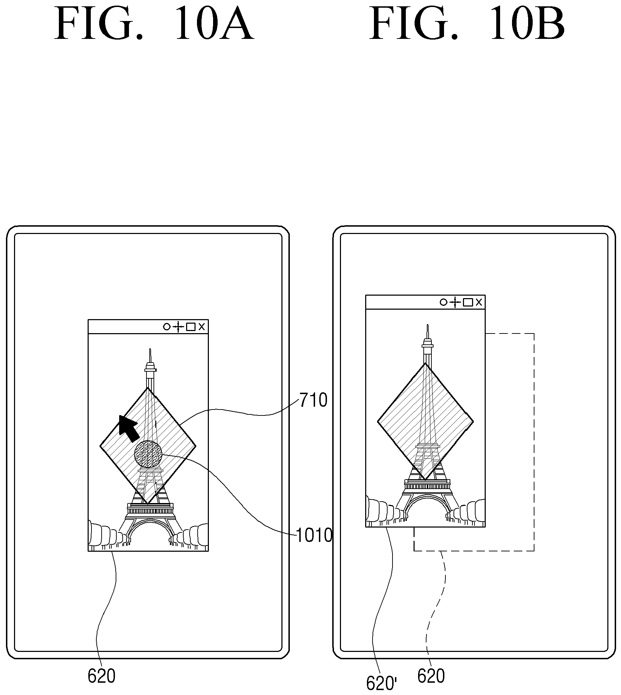

As illustrated in FIG. 10A, the electronic device 100 may determine that the user touch within the area in which the editing UI 710 is displayed is a single touch which touches the first point 1010. When a user touch which moves in the first direction is sensed while it is determined that a user touch is a single touch, the electronic device 100 may change the first area in which the first image 620 is to be displayed to an area corresponding to the first direction, move the first image 620 to the changed area and display the first image 620' as illustrated in FIG. 10B.

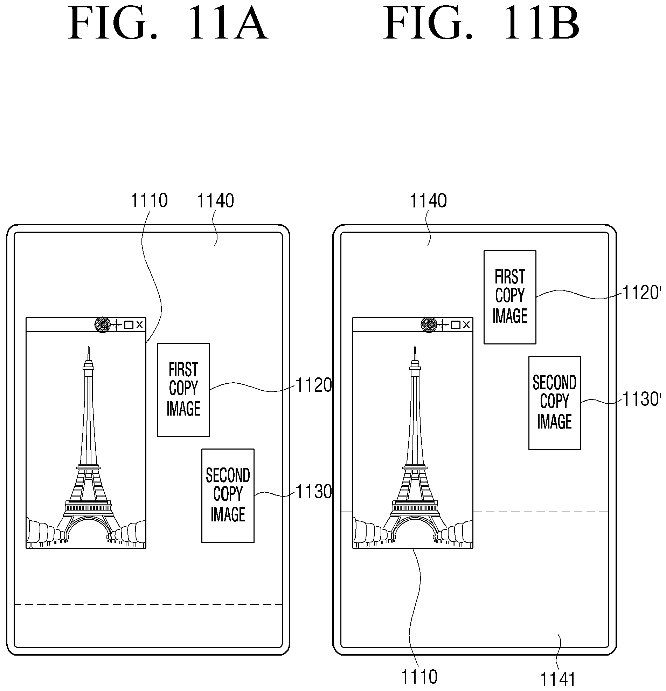

FIGS. 11A and 11B are diagrams illustrating an example of displaying a PIP image in response to a user command in an electronic device in accordance with an embodiment.

As illustrated in FIG. 11A, the electronic device 100 may display the first image 1110 received from the external terminal 200 in the first area of the display 120 in which the first page 1140 among a plurality of pages is displayed, and display the first copy image 1120 and the second copy image 1130 in the second and third areas. The first and second copy images 1120 may be copied from the first image 1110. However, the embodiments are not limited to the above example, and one of the first and second copy images 1120 may be copied from a different image from the first image 1110.

While the first image 1110 and the first and second copy images 1120 and 1130 are displayed on the display 120 in which the first page 1140 is displayed, when a user command for scrolling a page is input, the electronic device 100 may scroll the page in response to the user command.

As illustrated in FIG. 11B, the electronic device 100 may display the first and second pages 1140 and 1141 on the display 120 in response to a user command for scrolling a page. When the first and second pages 1140 and 1141 are displayed, the electronic device 100 may fix and display the first image 1110 in the first area. Also, the electronic device 100 may move the area in which the first and second copy images 1120 and 1130 are displayed in a direction corresponding to the direction in which the first page 1140 moves.

In other words, the electronic device 100 may change the area in which the first and second copy images 1120 and 1130 are displayed in the direction in which the first page 1140 moves. Accordingly, the electronic device 100 may display the first and second copy images 1120' and 1130' in the changed area in the direction in which the first page 1140 moves.

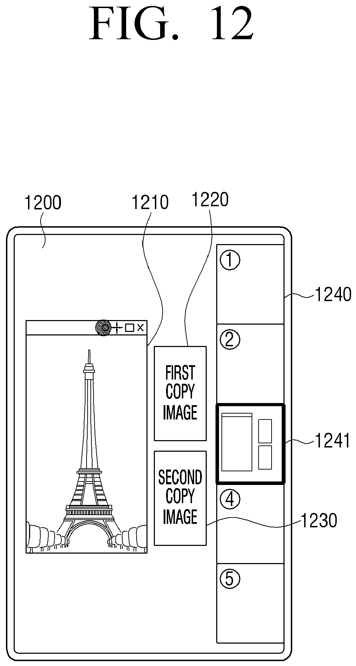

FIG. 12 is a diagram illustrating an example of a navigation window in an electronic device in accordance with an embodiment.

As illustrated in FIG. 12, the electronic device 100 may display the first image 1210 received from the external terminal 200 in the first area of the display which displays the first page 1200 among a plurality of pages, display the first and second copy images 1220 and 1230 in the second area, and display the navigation window 1240 which guides a plurality of pages in the third area.

For example, the electronic device 100 may display the navigation window 1240 including a page element corresponding to each of the plurality of pages in the third area. The electronic device may form the navigation window 1240 such that the first page element 1241 corresponding to the first page displayed on the display 120 among the plurality of page elements displayed on the navigation window 1240 is displayed differently from the other page elements, and display the navigation window 1240.

For example, the electronic device 100 may form the navigation window 1240 such that a highlight is displayed in the first page element 1241 corresponding to the first page displayed on the display 120, and display the navigation window 1240.

Also, the electronic device 100 may form the navigation window 1240 such that the first page element 1241 includes the first image 1210 displayed on the display 120 and the images which indicate the first and second copy images 1220 and 1230, respectively, and display the navigation window 1240.

As described above, when the first page is scrolled to the second page in response to a user command for scrolling a page, the electronic device 100 may fix and display the first image 1210 in the first area of the display 120 and display the scrolled second page.

The electronic device 100 may also form the navigation window 1240 such that a highlight is changed from the first page element 1241 to a page element corresponding to the second page and is displayed in response to the user command for scrolling a page, and display the scrolled second page. Further, the electronic device 100 may form the navigation window 1241 such that only the images which indicate the first and second copy images 1220 and 1230 among a plurality of images included in the first page element 1241 are included in the first page element 1241, and the image indicating the first image 1210 is included in a page element corresponding to the second page.

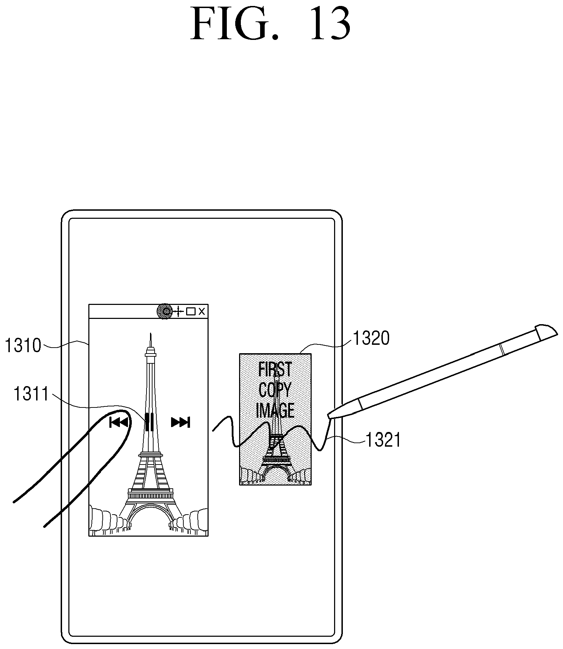

FIG. 13 is a diagram illustrating an example of performing an operation according to a user command in a PIP mode in an electronic device in accordance with an electronic device.

As illustrated in FIG. 13, the electronic device 100 may display the first image 1310 received from the external terminal 200 in the first area of the display 120, and display the first copy image 1320 copied from the first image 1310 in the second area. The first image 1310 displayed in the first area may be a video reproduced by the external terminal 200.

When a user touch for the first area in which the first image 1310 is displayed is sensed while the first image 1310 and the first copy image 1320 are displayed, the electronic device 100 may display the icon 1311 for controlling the reproduction of the first image 1310. When the icon 1311 displayed on the first image 1311 is selected in response to a user command, the electronic device 100 may transmit a control command corresponding to the selected icon 1311 to the external terminal 200 which transmits the first image. Accordingly, the external terminal 200 may control the reproduction of the video based on the control command received from the electronic device 100.

When a user touch is sensed in the remaining area excluding the first area in which the first image 1310 is displayed, the electronic device 100 may perform a drawing function according to a user touch and display a drawing image.

In other words, the electronic device 100 may display the drawing image 1321 when a user touch using a user's finger or an input device such as a stylus pen is input on the remaining area including the second area where the first copy image 1320 is displayed.

However, the present disclosure is not limited to the above, and if a user touch is sensed in the second area where the first copy image 1320 is displayed, the electronic device 100 may display the drawing image 1321 corresponding to the user touch on the second area where the user touch is sensed.

In the below description, a control method of an electronic device 100 will be described in detail in accordance with an embodiment.

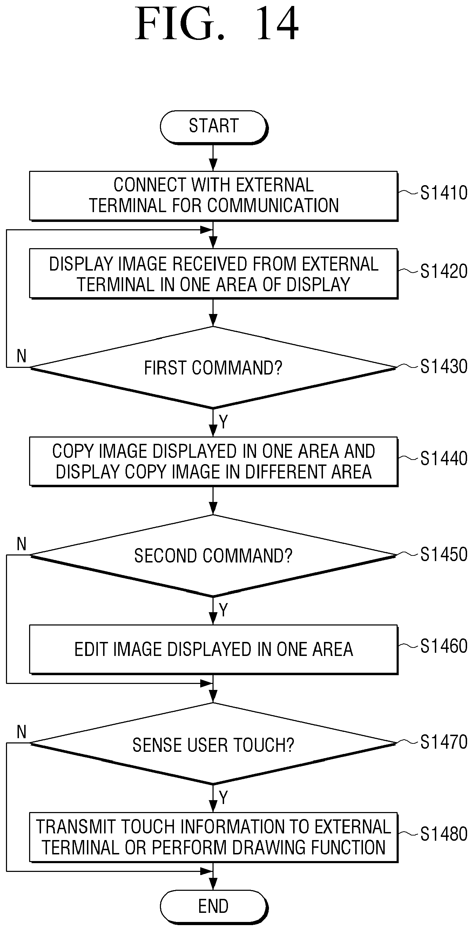

FIG. 14 is a flowchart illustrating a control method of an electronic device in accordance with an embodiment.

As illustrated in FIG. 14, the electronic device 100 may perform communication connection with the external terminal 200 (S1410). According to an embodiment, the electronic device 100 and the external terminal 200 may include an NFC module for NFC communication. When the external terminal 200 is tagged to the electronic device 100, the electronic device 100 may be connected with the external terminal 200 for communication using the NFC module.

Once the electronic device 100 is connected with the external terminal 200 for communication, the electronic device 100 may receive an image displayed by the external terminal 200, and display the received image on one area of a display (S1420).

Also, the electronic device 100 may display an icon for copying the image received from the external terminal 200 along with the received image in one area. The electronic device 100 may also display an icon for editing at least one of a size, a position and a direction of the received image in the one area in which the image received from the external terminal 200 is displayed.

The electronic device 100 may also display at least one icon in the remaining area excluding the one area in which the image received from the external terminal 200 is displayed. For example, the electronic device 100 may display at least one of an icon for guiding connection with the external terminal 200 which transmits an image to be displayed in one area and an icon for transmitting the image displayed in one area of a display to the external terminal 200.

While a plurality of icons are displayed in the one area and the remaining area, the electronic device 100 may receive an input of a user command through the icon. If the user command input through the icon is the first command from a user for copying the image received from the external terminal 200, the electronic device 100 may copy the image displayed in the one area at the time when the first command is input, and display the copied image in an area different from the one area (S1430 and S1440)

If the user command input through the icon while the image received from the external terminal 200 and the image copied from the image are displayed in a form of PIP is the second command from the user for editing the image received from the external terminal 200, the electronic device 100 may edit at least one of a size, a position and a direction of the image received from the external terminal 200 in response to the second command(S1450 and S1460).

The electronic device 100 may display the image received from the external terminal 200 in one area, and when a user touch is sensed while the copied image is displayed, the electronic device 100 may transmit the touch information to the external terminal 200 or perform a drawing function (S1470).

The electronic device 100 may display the image received from the external terminal 200 in the one area, and when a user touch is sensed while the copied image is displayed in the different area, the electronic device 100 may determine the point at which the user touch is sensed. As the result of the determination, if the user touch is within the one area in which the image received from the external terminal 200 is displayed, the electronic device 100 may transmit the touch information corresponding to the user touch to the external terminal 200.

If the point at which the user touch is sensed is in the remaining area excluding the one area in which the image received from the external terminal 200 is displayed, the electronic device may perform a drawing function according to the sensed user touch. Accordingly, the electronic device 100 may display a drawing image corresponding to the user touch in the point at which the user touch is sensed.

According to another embodiment, the electronic device 100 may delete the image displayed in one area according to a user command for deleting the image received from the external terminal 200 while the image received from the external terminal 200 and the image copied from the image are displayed in a form of PIP.

The electronic device may also display at least one of a plurality of pages through a display. Thus, when a user command for scrolling at least one of the pages displayed in the display is input, the electronic device 100 may scroll the page based on the input user command. While the page is scrolled in response to the user command, the electronic device 100 may fix and display the image displayed in one area.

The electronic device may also display a navigation window for guiding a plurality of pages in a different area excluding the one area in which the image received from the external terminal 200 is displayed and the area in which the image copied from the received image is displayed.

The control method of the electronic device 100 according to the one or embodiments may be coded to software and be stored in a non-transitory readable medium. The non-transitory readable medium may be provided in various devices and be used.

A non-transitory computer readable medium may refer to a machine-readable medium or device which stores data semi-permanently and not for a short period of time, such as a register, cache, memory, and the like. The aforementioned various applications or programs may be stored in a non-transitory computer readable medium such as a compact disc (CD), a digital versatile disc (DVD), a hard disk, a Blu-ray disc, a universal serial bus (USB) stick, a memory card, a ROM, etc.

The foregoing embodiments and advantages are merely examples and are not to be construed as limiting the embodiments. The description of the embodiments is intended to be illustrative, and not to limit the scope of the inventive concept, as defined by the appended claims, and many alternatives, modifications, and variations will be apparent to those skilled in the art.

## Claims

1. A control method of an electronic device comprising:
receiving an image, displayed by an external terminal, from the external terminal;
displaying the received image on a first area of a display of the electronic device; and
in response to receiving a copy command from a user for copying the received image, copying the received image displayed on the first area at a time when the copy command is input and displaying the copied image on an second area which is different from the first area of the display.

2. The method as claimed in claim 1, wherein both the electronic device and the external terminal include a Near Field Communication (NFC) module for NFC communication, and
wherein the method further comprises:
in response to the external terminal being tagged to the electronic device, performing a communication connection with the external terminal using the NFC module.

3. The method as claimed in claim 1, wherein the displaying the received image on the first area of the display comprises:
displaying at least one of a first icon for guiding connection with the external terminal, to transmit a first image to be displayed on the first area and a second icon for transmitting a second image displayed on the display on a remaining area excluding the first area to the external terminal.

4. The method as claimed in claim 1, wherein the displaying the received image on the first area of the display comprises:
displaying an icon for copying the received image displayed on the first area, and
wherein the copy command for copying the received image comprises selecting the icon for copying the received image.

5. The method as claimed in claim 1, wherein the displaying the received image on the first area of the display comprises:
displaying an icon for editing at least one of a size, a position and a direction of the received image displayed on the first area;
receiving a user selection of the icon; and
editing at least one of a size, a position and a direction of the received image according to the user selection of the icon.

6. The method as claimed in claim 1, wherein the displaying the copied image on the second area which is different from the first area comprises displaying the received image on the first area and displaying the copied image on the second area, and
wherein the method further comprises, in response to receiving a delete command from the user for deleting the received image while the received image and the copied image are displayed, deleting the received image displayed on the first area.

7. The method as claimed in claim 1, wherein the display displays at least one of a plurality of pages, and
wherein the displaying the received image on the first area of the display comprises, while scrolling a page based on a scroll command from the user for scrolling at least one of the pages displayed on the display, fixedly displaying the received image on the first area.

8. The method as claimed in claim 7, wherein the displaying the received image on the first area of the display comprises displaying a navigation window for guiding the plurality of pages on areas of the display other than the first area.

9. The method as claimed in claim 1, further comprising:
in response to sensing a first touch from the user in the first area while the received image is displayed on the first area, transmitting touch information corresponding to the sensed first touch to the external terminal; and
in response to sensing a second touch from the user in a remaining area excluding the first area while the received image is displayed on the first area, performing a drawing function according to the second touch.

10. The method as claimed in claim 1, wherein in response to receiving the copy command for copying the received image, the copied image and the received image are simultaneously displayed.

11. An electronic device comprising:
a communicator;
a display; and
a processor configured to:
receive an image, displayed by an external terminal, from the external terminal via the communicator;
control the display to display the received image on a first area of the display, and
in response to receiving a copy command from a user for copying the received image, copy the received image displayed on the first area of the display at a time when the copy command is input and display the copied image on a second area other than the first area of the display.

12. The electronic device as claimed in claim 11, wherein the communicator comprises: a Near Field Communication (NFC) module configured to perform NFC communication with the external terminal; and
wherein in response to the external terminal being tagged to the electronic device, the processor is further configured to control the communicator to perform a communication connection with the external terminal using the NFC module.

13. The electronic device as claimed in claim 11, wherein the processor is further configured to:
control the display to display at least one of a first icon for guiding connection with the external terminal to transmit a first image to be displayed on the first area and a second icon for transmitting a second image displayed on the display on a remaining area excluding the first area to the external terminal.

14. The electronic device as claimed in claim 11, wherein the processor is further configured to control the display to display an icon for copying the received image displayed on the first area, and
wherein the copy command for copying the received image comprises a selection of the icon for copying the received image.

15. The electronic device as claimed in claim 12, wherein the processor is further configured to control the display to display an icon for editing at least one of a size, a position, and a direction of the received image displayed on the first area; and
in response to receiving a user selection of the icon, edit at least one of a size, a position and a direction of the received image according to the user selection of the icon.
